# EUROPÄISCHE PATENTSCHRIFT

(11) **EP 3 218 243 B1**
(45) Veröffentlichungstag und Bekanntmachung des Hinweises auf die Patenterteilung: **30.09.2020**
(21) Anmeldenummer: 16700535.4
(22) Anmeldetag: 07.01.2016
(51) Int. Cl.: B61L 5/18, G02F 1/01

(54) **LICHTSIGNAL**
LIGHT SIGNAL
SIGNAL LUMINEUX

(30) Priorität: 12.01.2015 DE 102015200247
(43) Veröffentlichungstag der Anmeldung: 20.09.2017
(73) Patentinhaber: Siemens Mobility GmbH, 81739 München (DE)
(72) Erfinder: ECKL, Rolf, 12305 Berlin (DE); KÖSTER, Kay, 15370 Fredersdorf (DE); MARINCIC, Zeljko, 12103 Berlin (DE)
(86) Internationale Anmeldenummer: PCT/EP2016/050149
(87) Internationale Veröffentlichungsnummer: WO 2016/113163

(56) Entgegenhaltungen:
- EP-A2- 1 215 640
- DE-A1-102008 039 188
- DE-A1-102013 207 416
- GB-A- 2 497 757
- US-A- 4 652 851

## Beschreibung

Die Erfindung betrifft ein Lichtsignal, insbesondere für schienengebundene Verkehrswege, mit einer Steuereinrichtung, die eine Lichtquelle ansteuert und einem optischen System zur Signalbegriffsvisualisierung.

Prinzipiell dienen Lichtsignale als Signalgeber oder Symbolanzeiger, die durch Farb- und/oder Formgebung einer Leuchtfläche, das heißt durch die Abstrahlcharakteristik, bestimmte Informationen vermitteln. Dabei handelt es sich häufig um sicherheitsrelevante Informationen, die keinesfalls optisch verfälscht oder durch Fremdlicht überblendet sein dürfen. Das unerwünschte Aufleuchten beziehungsweise Verfälschen eines Lichtpunktes durch Einfall von Umgebungslicht, zum Beispiel Sonneneinstrahlung oder Scheinwerferlicht, wird als Phantomeffekt bezeichnet. Durch den Phantomeffekt kann es in Extremfällen zu einer falschen Anzeige infolge eines unzeitigen Aufleuchtens eines Lichtpunktes oder einer Farbverschiebung kommen. Besonders störend tritt dieser Effekt bei der Verwendung von LED-Anordnungen als Lichtquelle auf, da LED's durch auftreffendes Licht zum Leuchten angeregt werden können beziehungsweise bei LED-Lichtquellen häufig rückwärtige Reflektoren eingesetzt werden. Neben den Phantomerzeugern, die bei der Projektierung vorhersehbar sind, zum Beispiel tiefstehende Sonne für Signale in Ost-West-Orientierung, treten auch sporadisch oder unvorhergesehene Quellen für Phantome, zum Beispiel Fahrzeug- oder Bauscheinwerfer, Reflexion an Oberflächen, zum Beispiel an verglasten Fronten oder Schneedecken, auf. Damit kann auch ein Signal, das aufgrund des Standortes phantomsicher sein sollte, phantomanfällig sein. Generell wird versucht, den Phantomeffekt durch Blenden, Schuten, Vermeidung von Ost-West-Orientierung oder durch Wiederholung von kritischen Signalen zu minimieren.

Die nachstehenden Erläuterungen beziehen sich im Wesentlichen auf Lichtsignale zur Darstellung von Signalbegriffen bei schienengebundenen Verkehrswegen, ohne dass der beanspruchte Gegenstand auf diese Anwendung beschränkt sein soll.

Bei Eisenbahnsignalen muss gewährleistet sein, dass der Triebfahrzeugführer bei Annäherung an das für ihn bestimmte Signal dieses immer eindeutig erkennen kann. Dabei müssen unterschiedliche Streckengeometrien, das heißt gerade Strecke, Kurven und/oder Höhenunterschiede, berücksichtigt werden. Neben der Fernbereichsdarstellung ist auch eine Nahbereichsdarstellung des Signalbegriffs erforderlich, damit der Triebfahrzeugführer das Lichtsignal auch dann erkennen kann, wenn er direkt vor dem Signal steht.

Die Lichtsignale für schienengebundene Verkehrswege unterliegen strengen zulassungsrelevanten Anforderungen bezüglich der erlaubten Helligkeitsgrenzen, der räumlichen Lichtverteilung und der Phantomlichtstärke.

Das Dokument EP 1 215 640 A2 offenbart ein bekanntes Lichtsignal, insbesondere eine Verkehrsampel, mit einem Gehäuse mit mehreren Öffnungen, die durch Platten geschlossen werden, deren Absorption elektrisch gesteuert werden kann.

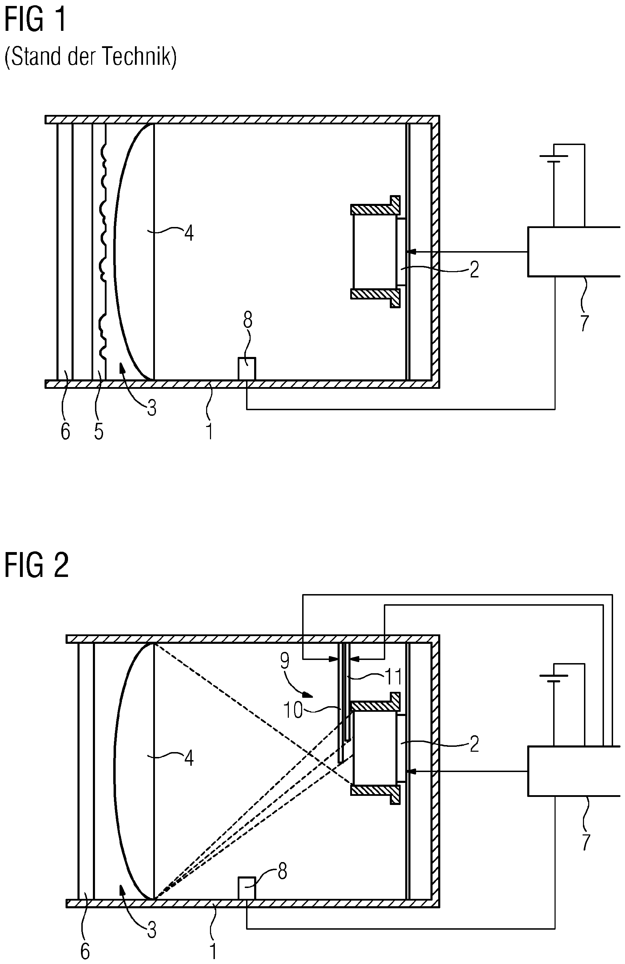

Figur 1 zeigt schematisch den Aufbau eines bekannten Licht-signals.

Dabei ist ein Gehäuse 1 vorgesehen, in dem eine LED-Lichtquelle 2 mit Sekundäroptik, beispielsweise Lichtleiter oder Linsen, zur Lichtmischung und Strahlformung sowie ein optisches System 3 eingebaut sind. Das optische System 3 besteht im Wesentlichen aus einer Frontlinse 4, mindestens einer Streuscheibe 5 und einer Abschlussscheibe 6, wobei diese Komponenten auch als Kombiteil ausgebildet sein können. Eine Steuereinrichtung 7 ist mit einem Nutzlichtsensor 8 innerhalb des Gehäuses 1 zwecks Erfassung von Intensität und/oder Farbe des Lichtstromes verbunden. Mit den Messwerten des Nutzlichtsensors 8 und von einem Stellwerk vorgegebenen Sollparametern beaufschlagt die Steuereinrichtung 7 die LED-Lichtquelle 2.

Die Streuscheibe 5 ist vorzugsweise mit einem Streusegment für die Signalbegriffsvisualisierung in den Nahbereich versehen, wobei eine Graufärbung der Streuscheibe 5 dem Phantomeffekt entgegenwirkt. Mit dieser Vereinigung der Lichtstreuung und der Reduzierung des Phantomeffektes entsteht aber zwangsläufig ein Kompromiss, der dazu führt, dass die Phantomschutzwirkung zumindest für die Gruppe der bodennahen Lichtsignale, welche im Nahbereich nach oben abstrahlen, nicht ausreichend ist. Aufgrund der Abhängigkeit von den stellwerkseitig vorgegebenen Steuerparametern sind zum Erreichen der optischen Leistungsdaten häufig mehrere Graufilter und/oder grau eingefärbte Streuscheiben 5 erforderlich. Die Spanne der Transmissionen verwendeter Graufilter reicht dabei von ca. 3 % bis über 70 % Lichtdurchsatz. Der benötigte Transmissionsgrad wird dabei durch Wahl des Filtermaterials und Anpassung der Materialdicke erzeugt. Dabei müssen die Graufilter neben den mechanischen Einbaubedingungen auch die optischen Anforderungen bezüglich Farbneutralität und Langzeitstabilität einhalten.

Der Erfindung liegt die Aufgabe zugrunde, ein Lichtsignal der gattungsgemäßen Art anzugeben, bei dem eine Beeinträchtigung der Sicherheit infolge kurviger Strecken, Nah- und Fernbereichsausleuchtung und Phantomeffekt weitgehend vermeidbar ist.

Erfindungsgemäß wird die Aufgabe durch den Gegenstand von Patentanspruch 1 gelöst.

Bei der Smart-Glass-Technologie werden die Transmissionseigenschaften eines scheibenförmigen Elementes durch Anlegen einer elektrischen Spannung, durch Hitze oder einfallendes Licht verändert. Smart-Glass ist im Wesentlichen kontinuierlich durchstimmbar, wohingegen die üblichen Streuscheiben nur diskrete Transmissionswerte aufweisen und daher nur in Kombination eine breite Anwendung finden. Außerdem sind Smart-Glass-Elemente nicht materialdickeabhängig. Durch die stete Weiterentwicklung der Smart-Glass-Technologie stehen immer unterschiedlicher werdende Smart-Glass-Elemente immer kostengünstiger zur Verfügung. Es besteht die Möglichkeit, im Fehlerfall oder bei zu großem Phantomeffekt das Smart-Glass-Element des Lichtsignals opak oder lichtundurchlässig zu schalten oder bei geänderten Aufstellbedingungen eine Anpassung der Lichtstärke auf einfache Weise mittels Umgebungslichtsensor zu realisieren. Auch diffuse oder streuende Eigenschaften des Smart-Glass-Elementes können zwecks Formung der Lichtverteilung eingestellt werden. Das Smart-Glass-Element kann die üblicherweise verwendeten Streuscheiben und Graufilter vollständig ersetzen.

Gemäß Anspruch 2 ist das Smart-Glass-Element zwischen der Lichtquelle und dem vereinfachten streuscheibenfreien optischen System angeordnet. Durch diese Anordnung im Zusammenwirken mit der Positionierung der Lichtquelle und des optischen Systems, gegebenenfalls auch von Spiegeln und anderen Komponenten des Lichtsignals, können wahlweise unterschiedliche Strahlgeometrien und damit verschiedene Lichtverteilungen zur Ausleuchtung verschiedener Gleisverläufe und/oder Nah-und Fernbereichsausleuchtung und/oder zur Reduzierung des Phantomeffektes realisiert werden.

Das Smart-Glass-Element kann zur Strahlformung genutzt werden. Beispielsweise gemäß der Ansprüche 6 bis 7 kann das Smart-Glass-Element so angeordnet sein, dass es in den Lichtstrom ragt. Ferner kann das Smart-Glass-Element in einen Teil des Lichtstroms ragen.

Das erfindungsgemäße Lichtsignal weist zwei Smart-Glass-Elemente auf, die derart angeordnet sind, dass sie unterschiedlich weit in den Lichtstrom hineinragen.

Vorzugsweise ist die Steuereinrichtung der Lichtquelle gemäß Anspruch 3 zusätzlich auch zur Transmissionssteuerung des Smart-Glass-Elementes ausgebildet. Dadurch ergibt sich ein einfacher Aufbau, wobei der üblicherweise vorhandene Nutzlichtsensor innerhalb des Lichtsignal-Gehäuses zur Einstellung der Transmissionswerte des Smart-Glass-Elementes mitverwendet werden kann.

Zusätzlich oder alternativ kann die Steuereinrichtung gemäß Anspruch 4 mit mindestens einem Umgebungslichtsensor verbunden sein. Durch die Berücksichtigung des Umgebungslichtes zur Einstellung der Transmissionswerte des Smart-Glass-Elementes kann beispielsweise eine kontinuierliche Anpassung an Tag-, Dämmerungs- und Nacht-Sichtverhältnisse realisiert werden.

Erfindungsgemäß ist vorgesehen, dass das Smart-Glass-Element zwei separat transmissionssteuerbare, insbesondere kreissegmentförmige, Smart-Glass-Scheiben aufweist. Auf diese Weise können verschiedene Einflussgrößen sehr einfach kombiniert und optimal eingestellt werden.

Die Erfindung wird nachfolgend anhand figürlicher Darstellungen näher erläutert. Es zeigen:
- Figur 1: schematisch das bereits weiter oben beschriebene Lichtsignal bekannter Bauart und
- Figur 2: ein Ausführungsbeispiel eines Lichtsignals bean-spruchter Bauart in gleicher Darstellungsweise wie Figur 1.

Figur 2 veranschaulich ein Lichtsignal, bei dem zwischen der LED-Lichtquelle 2 und dem optischen System 3 ein Smart-Glass-Element 9 angeordnet ist. Das Smart-Glass-Element 9 besteht bei dem Ausführungsbeispiel aus zwei separaten Smart-Glass-Scheiben 10 und 11, die unterschiedlich weit in den Lichtstrom hineinragen. Die Steuereinrichtung 7 erzeugt neben dem Ansteuersignal für die LED-Lichtquelle 2 zusätzlich auch die Ansteuersignale für den Transmissionsgrad der Smart-Glass-Scheiben 10 und 11. Letzte Ansteuersignale können durchaus unterschiedlich sein, um die gewünschte Lichtverteilung einzustellen. Dabei kann der Phantomeffekt verringert werden und gleichzeitig eine Nah- und Fernbereichsausleuchtung mit Berücksichtigung einer kurvigen Streckenführung, insbesondere für den Fernbereich, erfolgen. Die üblicherweise für diese Anforderungen verwendeten Streuscheiben 5/Figur 1 sind damit nicht mehr erforderlich. Durch das transmissionssteuerbare Smart-Glass-Element 9 ergibt sich eine wesentlich exaktere Einstellbarkeit der zulassungsrelevanten Anforderungen bezüglich der erlaubten Helligkeitsgrenzen, gegebenenfalls auch mit kontinuierlicher Lichtstärkeregelung für Tag-, Dämmerungs- und Nachtbetrieb, sowie der räumlichen Lichtverteilung und der Phantomlichtstärke.

## Patentansprüche

1. Lichtsignal, insbesondere für schienengebundene Verkehrswege, mit einer Steuereinrichtung (7), die eine Lichtquelle (2) ansteuert und einem optischen System (3) zur Signalbegriffsvisualisierung, wobei in einem Apertursegment des Lichtstromes ein transmissionssteuerbares Smart-Glass-Element (9) vorgesehen ist,
**dadurch gekennzeichnet, dass**
das Smart-Glass-Element (9) zwei separat transmissionseinstellbare Smart-Glass-Scheiben (10 und 11) aufweist, die derart angeordnet sind, dass sie unterschiedlich weit in den Lichtstrom hineinragen.

2. Lichtsignal nach Anspruch 1,
**dadurch gekennzeichnet, dass**
das Smart-Glass-Element (9) zwischen der Lichtquelle (2) und dem optischen System (3) angeordnet ist.

3. Lichtsignal nach einem der vorangehenden Ansprüche,
**dadurch gekennzeichnet, dass**
die Steuereinrichtung (7) zur Transmissionseinstellung des Smart-Glass-Elementes (9) ausgebildet ist.

4. Lichtsignal nach einem der vorangehenden Ansprüche,
**dadurch gekennzeichnet, dass**
die Steuereinrichtung (7) mit mindestens einem Umgebungslichtsensor verbunden ist.

5. Lichtsignal nach einem der vorangehenden Ansprüche,
**dadurch gekennzeichne**t, dass
die Smart-Glass-Scheiben (10, 11) kreisseigmentförmig ausgebildet sind.

6. Lichtsignal nach einem der vorangehenden Ansprüche,
**dadurch gekennzeichnet, dass** das Smart-Glass-Element (9) in einen Teil des Lichtstroms ragt.

## Claims

1. Light signal, in particular for rail-bound traffic routes, with a control device (7), which controls a light source (2) and an optical system (3) for visualising the signal term,wherein a transmission-controllable smart-glass element (9) is provided in an aperture segment of the light flow,
**characterised in that**
the smart-glass element (9) has two separate transmission-adjustable smart-glass discs (10 and 11) which are arranged such that they project to varying degrees into the light flow.

2. Light signal according to claim 1,
**characterised in that**
the smart-glass element (9) is arranged between the light source (2) and the optical system (3).

3. Light signal according to one of the preceding claims,
**characterised in that**
the control device (7) is embodied to set the transmission of the smart-glass element (9).

4. Light signal according to one of the preceding claims,
**characterised in that**
the control device (7) is connected to at least one ambient light sensor.

5. Light signal according to one of the preceding claims,
**characterised in that**
the smart-glass discs (10, 11) are embodied to be circular-segment-shaped.

6. Light signal according to one of the preceding claims,
**characterised in that**
the smart-glass element (9) projects into one part of the light flow.

## Revendications

1. Panneau lumineux, notamment pour voies de circulation sur rail, comprenant un dispositif (7) de commande, qui commande une source (2) lumineuse et un système (3) optique de visualisation de l'aspect du panneau, dans lequel un élément (9) en verre intelligent, pouvant être commandé en transmission, est prévu dans un segment d'ouverture du flux lumineux,
**caractérisé en ce que**
l'élément (9) en verre intelligent a deux vitres (10 et 11) en verre intelligent, réglables en transmission séparément, qui sont disposées de manière à pénétrer différemment loin dans le flux lumineux.

2. Panneau lumineux suivant la revendication 1,
**caractérisé en ce que**
l'élément (9) en verre intelligent est disposé entre la source (2) lumineuse et le système (3) optique.

3. Panneau lumineux suivant l'une des revendications précédentes,
**caractérisé en ce que**
le dispositif (7) de commande est constitué pour le réglage de la transmission de l'élément (9) en verre intelligent.

4. Panneau lumineux suivant l'une des revendications précédentes,
**caractérisé en ce que**
le dispositif (7) de commande est relié à au moins un capteur de la lumière ambiante.

5. Panneau lumineux suivant l'une des revendications précédentes,
**caractérisé en ce que**
les vitres (10, 11) en verre intelligent sont constituées sous la forme de segment de cercle.

6. Panneau lumineux suivant l'une des revendications précédentes,
**caractérisé en ce que**
l'élément (9) en verre intelligent pénètre dans une partie du flux lumineux.
